# EUROPÄISCHE PATENTANMELDUNG

(11) **EP 2 319 673 A1**
(43) Veröffentlichungstag der Anmeldung: **11.05.2011**
(21) Anmeldenummer: 10014307.2
(22) Anmeldetag: 05.11.2010
(51) Int. Cl.: B29C 44/04, B29C 41/04, B29C 33/00, B29C 44/34

(54) **Verfahren zum Schäumen von Schaltknäufen**

(30) Priorität: 06.11.2009 DE 102009052239
(71) Anmelder: Thielen, Chistoph, 37520 Osterode (DE)
(72) Erfinder: Thielen, Chistoph, 37520 Osterode (DE)
(74) Vertreter: Callies, Rainer Michael

(57) **Zusammenfassung**

Bei der Erfindung handelt es sich um ein Verfahren zum Schäumen von Schaltknäufen, bei dem eine Schäumform (8) nach Befüllung mit den Schaumkomponenten in Rotation um die Hauptachse einer Außenhaut des Schaltknaufs versetzt wird. Es kann vorgesehen sein, dass die Rotation nach Bildung einer festen Außenhaut des Schaltknaufs beendet wird, damit sich im restlichen Raum zwischen der Außenhaut und einem Kernstück (1) eine Schaumstruktur ausbilden kann. Mit dem erfindungsgemäßen Verfahren kann der Ausschuss aufgrund von Fehlstellen, Löchern und Lunkern vermieden werden, wobei nur noch der Anguss- und Verteilerbereich nachträglich entfernt werden muss.

## Beschreibung

Die Erfindung bezieht sich auf ein Verfahren zum Schäumen von Schaltknäufen.

Das Schäumen von Schaltknäufen, vorzugsweise aus Polyurethan (PUR) ist eine gängige Herstellungsmethode. Die so hergestellten Knäufe zeichnen sich durch einen angenehm trockenen Griff und aufgrund des Schaums durch eine gewisse Flexibilität aus.

Die Fertigung nach der üblichen Methode ist jedoch sehr zeitaufwändig und mit hohem Ausschuss behaftet.

Üblicherweise wird mit hohen Wandstärken des Schaums größer/gleich 10 mm gearbeitet, dadurch ergeben sich Zeiten zwischen Befüllung des Werkzeuges und Entformung des Knaufs von teilweise mehr als 120 Sekunden, Aufgrund dieser hohen Zykluszeit wird eine große Anzahl von Werkzeugen benötigt, um eine bestimmte Jahresmenge zu produzieren.

Ein weiteres Problem ist der Ausschuss bei der Fertigung, der bis zu 40 % betragen kann. Hauptursache sind sichtbare Fehlstellen, Löcher und Lunker.

Um diese Probleme einigermaßen zu beherrschen, sind die Formen nicht dicht, sondern in der Formtrennebene mit einem definierten Spalt gefertigt, der einen Austrieb des Schaums ermöglicht. Dadurch wird ein Großteil der an den Werkzeugkanten haftenden Luftblasen ausgetrieben.

Allerdings müssen dieser Austrieb, sowie das Anguss- und Verteilsystem nach dem Schäumen in aufwändiger Handarbeit vom Knauf entfernt werden. Dieses letztere Problem wird durch die im Patentanspruch 1 aufgeführten Merkmale gelöst. Vorgeschlagen wird eine Form, die ohne Spalt in der Trennebene ausgeführt wird, insbesondere der Trennebene zwischen zwei Hälften der Schäumform, und nach dem Befüllen mit den Schaumkomponenten in Rotation um die Hauptachse der Knaufaußenhaut versetzt wird. Durch die auftretenden Zentrifugalkräfte werden die schweren Schaumkomponenten nach außen an die Wand des Werkzeuges gedrückt und die dort anhaftenden leichten Gasblasen nach innen verdrängt. Bei dieser Wand des Werkzeuges handelt es sich mit anderen Worten um die Wand bzw. Wandung, die den Hohlraum der Schäumform begrenzt.

Eine mögliche Ausgestaltung der Erfindung ist in Patentanspruch 3 angegeben. Es kann vorgesehen sein, dass nach Verfestigung einer dünnen, geschlossenen Außenhaut die Rotation beendet wird, damit sich in dem verbleibenden Zwischenraum zwischen der Außenhaut und einem Kernstück ein Schaum ausbilden kann. Bei dem Kernstück handelt es sich um ein Kernstück des Schaltknaufs. Ein solches Kernstück wird bei dem Verfahren in der Regel verwendet.

Die Vorteile des Verfahrens liegen darin, dass einerseits der Ausschuss aufgrund von Fehlstellen, Löchern und Lunkem vollständig vermieden wird und andererseits nur noch der Anguss- und Verteilerbereich nachträglich entfernt werden muss. Die Entfernung dieser Bereiche kann relativ leicht automatisiert werden, während die Entfernung des Austriebs aus der Trennebene, der beim herkömmlichen Verfahren entsteht, nicht oder nur mit sehr hohem Investitionsaufwand zu automatisieren ist.

Eine weitere vorteilhafte Ausgestaltung der Erfindung ist in Patentanspruch 4 angegeben. Wird die Knaufkonstruktion und hierbei insbesondere die Konstruktion des Kernstücks so ausgeführt, dass nur eine relativ geringe, konstante Wandstärke zwischen Kernstückoberfläche und Knaufaußenhaut verbleibt, so lässt sich die Zykluszeit deutlich reduzieren.

Weitere Ausgestaltungen der Erfindung sind in den Patentansprüchen 5 und 6 angegeben. Es kann insbesondere eine so schnelle Rotation vorgesehen sein, dass die auftretenden Zentrifugalkräfte so groß sind, dass Schaumkomponenten, insbesondere relativ schwere, nach außen an die Wand bzw. Wandung, welche den Hohlraum der Schäumform begrenzt, gedrückt werden und dadurch an der Wand anhaftende Gasblasen nach Innen verdrängt werden. Es kann insbesondere für die Rotation der Form eine Drehzahl von 150 Umdrehungen pro Minute oder mehr vorgesehen sein. Vorzugsweise ist eine Drehzahl von mindestens 300 Umdrehungen pro Minute vorgesehen, insbesondere kann die Drehzahl im Bereich von 400-700 Umdrehungen pro Minute liegen.

Ein Ausführungsbeispiel der Erfindung ist in den beigefügten Zeichnungen dargestellt und wird im Folgenden näher beschrieben. Es zeigen:
Fig. 1 einen typischen Schaltknauf in perspektivischer Seitenansicht (linke Darstellung) und in Schnittansicht gemäß Linie A-A (rechte Darstellung),
Fig. 2 ein Rotations-Schäumwerkzeug im zusammengebauten Zustand,
Fig. 3 das Werkzeug in geöffnetem Zustand,
Fig. 4 das Werkzeug geöffnet, mit einem eingelegten Kernstück.

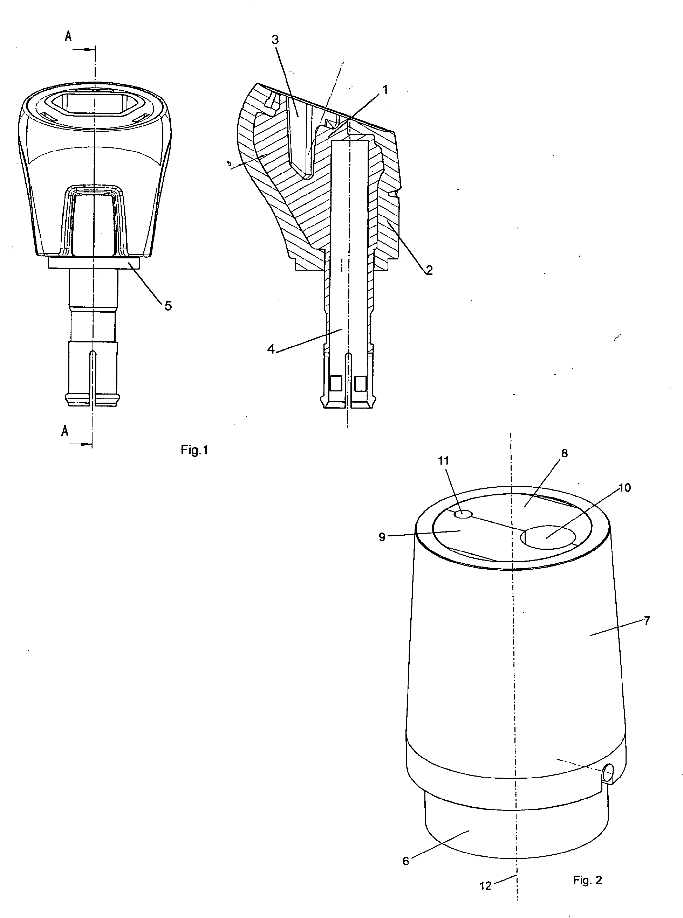

In Fig. 1 ist ein typischer Schaltknauf dargestellt. Er besteht aus dem Kernstück 1 und einer schaumhülle 2. Das Kernstück 1 dient zur Befestigung des Schaltknaufs auf dem Schalthebel (nicht gezeigt). Dazu wird der Schalthebel in eine Kernstückbohrung 4 gesteckt und anschließend z.B. mittels einer Schelle auf dem Schalthebel festgeklemmt.

Das Kernstück 1 ist so ausgeführt, dass sich in diesem Beispiel eine annähernd konstante Wandstärke des Schaums von 5 mm ergibt. Um zu große

Materialanhäufungen zu vermeiden, ist das Kernstück 1 ausgehöhlt, wie bei Bezugszeichen 3 zu sehen ist.

In Fig. 1 ist ebenfalls noch der Verteilerbereich 5 mit dargestellt, der anschließend entfernt werden muss.

Fig. 2 zeigt ein Rotations-Schäumwerkzeug im zusammengebauten Zustand. Zu erkennen sind eine Basis 6, eine Fixierhülse 7, mit der das Werkzeug zusammengehalten wird, Werkzeughälften 8 und 9, mit einer Füllöffnung 10 und einer Entlüftungsöffnung 11 sowie einer Rotationsachse 12.

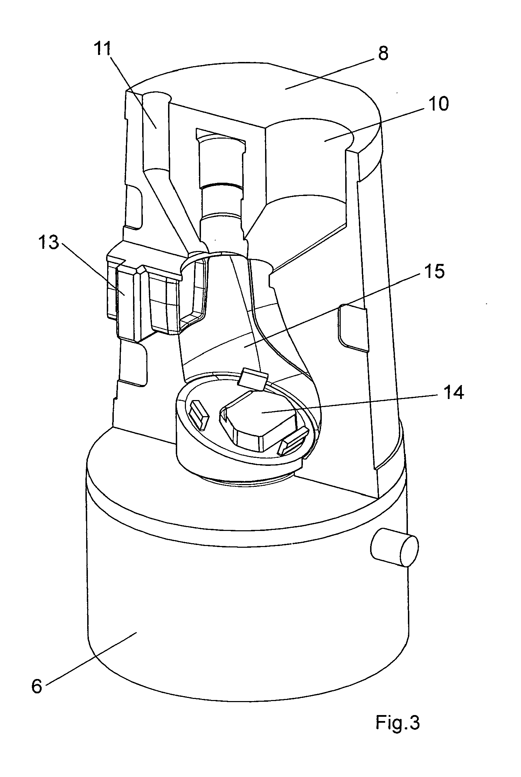

In Flg. 3 ist das geöffnete Werkzeug dargestellt, in dem zusätzlich die Aufnahme 14 für das Kernstück 1, die Außenfläche 15 des Schaltknaufs sowie ein Schieber 13 zu erkennen sind.

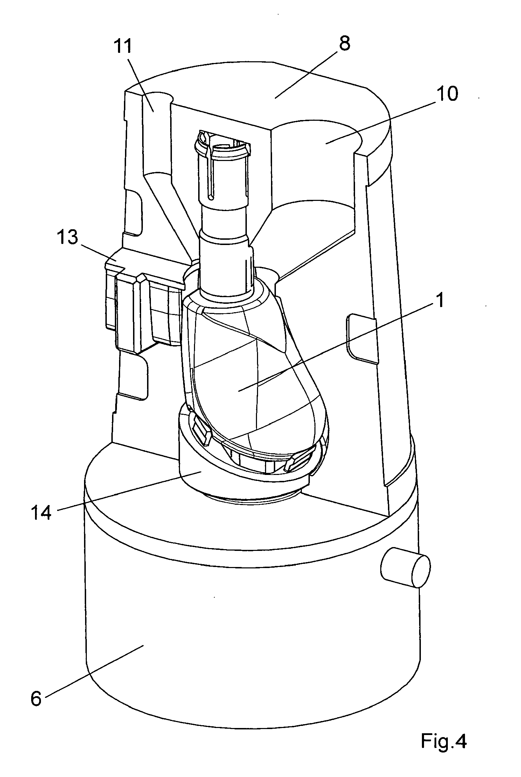

Fig. 4 zeigt das geöffnete Werkzeug mit eingelegtem Kernstück 1. Nach dem Einlegen des Kernstücks 1 in das Werkzeug, wird die Form zusammengebaut und mit der Fixierhülse 7 geschlossen.

Durch die Füllöffnung 10 werden die angemischten Schaumkomponenten zugeführt. Die im Werkzeug vorhandene Luft kann aus der Entlüftungsöffnung 11 entweichen.

Die Kavität wird nur zu etwa 50 % gefüllt, da die Schaumkomponenten noch aufschäumen und somit das restliche Volumen ausfüllen. Sofort nach Beendigung des Befüllvorganges wird die Form in Rotation um ihre Rotationsachse 12 versetzt. Nachdem sich an der Außenfläche 15 eine dünne geschlossene Haut gebildet hat, wird die Rotationsbewegung beendet. Der verbleibende Hohlraum wird anschließend vom Schaum ausgefüllt. Nach dem kompletten Aushärten des Schaums kann der Knauf entnommen werden. Der Verteilerbereich 5 mit evtl. Angussresten wird dann anschließend entfernt.

## Patentansprüche

1. Verfahren zum Schäumen von Schaltknäufen (1,2),
**dadurch gekennzeichnet, dass** eine Schäumform (8,9) nach dem Befüllen mit den Schaumkomponenten in Rotation um die Hauptachse (12) einer Außenhaut des Schaltknaufs (1,2) versetzt wird.

2. Verfahren nach Anspruch 1,
**dadurch gekennzeichnet, dass** es sich bei der Schäumform um eine Schäumform (8,9) ohne einen Spalt in einer Trennebene der Schäumform (8,9) handelt.

3. Verfahren nach Anspruch 1 oder 2,
**dadurch gekennzeichnet, dass** nach Bildung einer festen Außenhaut des Schaltknaufs (1,2) die Rotation beendet wird, damit sich im restlichen Raum zwischen der Außenhaut und einem Kernstück (1) eine Schaumstruktur ausbilden kann.

4. Verfahren nach einem der vorhergehenden Ansprüche,
**dadurch gekennzeichnet, dass** ein bzw. das Kernstück (1) des Schaltknaufs (1,2) so ausgebildet ist, dass sich eine annähernd konstante, geringe Schaumstärke ergibt.

5. Verfahren nach einem der vorhergehenden Ansprüche,
**dadurch gekennzeichnet, dass** die Rotation so schnell ist, dass durch die auftretenden Zentrifugalkräfte Schaumkomponenten nach außen an eine Wand der Schäumform (8,9) gedrückt werden und an der Wand anhaftende Gasblasen nach innen verdrängt werden.

6. Verfahren nach einem der vorhergehenden Ansprüche,
**dadurch gekennzeichnet, dass** die Rotation mit einer Drehzahl von mindestens 150 Umdrehungen pro Minute stattfindet.
